# EUROPÄISCHE PATENTSCHRIFT

(11) **EP 1 600 055 B1**
(45) Veröffentlichungstag und Bekanntmachung des Hinweises auf die Patenterteilung: **13.09.2006**
(21) Anmeldenummer: 04012515.5
(22) Anmeldetag: 27.05.2004
(51) Int. Cl.: A01K 5/00, F16H 1/14

(54) **Getriebe, und Futtermischer mit einem derartigen Getriebe**
Transmission and feed mixer with such a transmission
Transmission, et appareil mélangeur de fourrage avec une telle transmission

(43) Veröffentlichungstag der Anmeldung: 30.11.2005
(73) Patentinhaber: Focks, Hubert, 49808 Lingen (DE)
(72) Erfinder: Focks, Hubert, 49808 Lingen (DE)
(74) Vertreter: Habbel, Ludwig

(56) Entgegenhaltungen:
- DE-A- 19 501 463
- DE-C- 555 793
- DE-U- 7 133 897
- DE-U- 20 207 545

## Beschreibung

Die Erfindung betrifft einen Futtermischer nach dem Oberbegriff des Anspruchs 1 .

Bei den aus der Praxis bekannten Futtermischern handelt es sich um Behälter, üblicherweise in Form von fahrbaren Anhängern, die zur Aufnahme von Silagefutter dienen und in ihrem Inneren ein, zwei oder mehrere Rührwerke aufweisen, welche von der Zapfwelle einer landwirtschaftlichen Zugmaschine angetrieben werden. Getriebe leiten die Antriebsleistung von der Zapfwelle zu den Rührwerken.

Die genannten Getriebe weisen jeweils eine Eingangswelle auf, die direkt oder mittelbar von der Zapfwelle antreibbar ist. Weiterhin weisen diese Getriebe eine Ausgangswelle auf, sodass sie den Anschluss weiterer Getriebe ermöglichen. Eingangs- und Ausgangswelle können konstruktiv aus mehreren Teilen bestehen, von denen jeweils eines dieser Teile die Eingangswelle und ein anderes die Ausgangswelle bildet. Preisgünstiger und konstruktiv einfacher können die Eingangs- und die Ausgangswelle durch ein- und dasselbe Bauteil gebildet sein, also in Form einer durch das Getriebegehäuse durchgeführten Welle verwirklicht sein. Nachfolgend wird daher stets von einer Durchgangswelle" gesprochen, welche diese Ein- und Ausgangswelle bildet, wobei der Begriff der Durchgangswelle stellvertretend für die verschiedenen Bauformen steht, auch mit zwei oder mehreren Teilen, um eine Eingangs- und eine Ausgangswelle zu verwirklichen.

Weiterhin weisen die gattungsgemäßen Getriebe eine als Abtriebswelle bezeichnete Welle auf, die nämlich das dem Getriebe jeweils zugeordnete Rührwerk antreibt. Diese Abtriebswelle ist durch die Durchgangswelle des Getriebes angetrieben.

Bei Überlastung eines Rührwerks, z. B. wenn das Futter dieses Rührwerk blockiert, kann die zum Rührwerk geleitete Antriebsleistung dazu führen, dass das Getriebe zerstört wird, welches zwischen der antreibenden Welle und dem Rührwerk vorgesehen ist. Aus der Praxis sind daher als Überlastsicherungen Kraftbegrenzer vorgesehen, beispielsweise in Form von Abscherstiften, die das Getriebe schützen. Aus der Druckschrift DE-U-20207545 ist ein solcher Futtermischer bekannt.

Bei zwei oder mehr Rührwerken tritt die nachfolgend beschriebene Problemstellung auf, wobei rein beispielhaft nachfolgend stets von zwei Rührwerken ausgegangen wird.

Wenn ein einzelner Antriebsstrang vorgesehen ist, welcher durch das vordere in das hintere Getriebe verläuft, kann das in Kraftflussrichtung hintere Getriebe problemlos durch einen Kraftbegrenzer wie einen vorbeschriebenen Abscherstift geschützt werden. Bei Ausfall dieses Getriebes und des zugeordneten Rührwerks durch die Auskopplung aus dem Antriebsstrang ist das in Kraftflussrichtung vordere Rührwerk nach wie vor betriebsbereit. Die Rührfunktion des Futtermischers wird also eingeschränkt aufrechterhalten, und der wirtschaftliche Schaden beschränkt sich auf die Reparatur der Überlastsicherung.

Jedoch ist es nachteilig, das vordere Getriebe ebenfalls durch diese preisgünstige und im Reparaturfall einfach zu bedienende Technik zu schützen, denn beim Abscheren des Stiftes am vorderen Getriebe würde nicht nur das vordere, sondern auch das in Kraftflussrichtung hintere Getriebe aus dem Antriebsstrang ausgekoppelt. Ein Ausfall beider Rührwerke wird nicht akzeptiert, so daß das vordere Getriebe nicht abgesichert wird. Sollte das vordere Getriebe überlastet werden, würde es zerstört, aber die Antriebskraft würde weiterhin zu dem hinteren Getriebe geleitet. Die Rührfunktion des Futtermischers wird also eingeschränkt aufrechterhalten, der wirtschaftliche Schaden umfaßt allerdings den Ersatz eines Getriebes.

Bei dem vorbeschriebenen Ausfall des hinteren Getriebes kann allerdings die nun ausschließlich in das vordere Getriebe geleitete Antriebskraft dazu führen, daß dieses Getriebe überlastet wird und versagt. Zusätzlich zu dem unerwünschten Totalausfall der Rührfunktion ist dies der wirtschaftlich schwerste Schaden, da beide Getriebe ersetzt werden müssen.

Aus der nachveröffentlichten DE 102 15 031 A1 ist eine Antriebseinrichtung für einen Streuwagen bekannt, wobei eine Antriebswelle mehrere Streuelemente über je ein Kegelradgetriebe antreibt und die Antriebswelle mehrere Scherbolzenkupplungen aufweist, die den Antriebsstrang bei Überschreiten eines definierten Grenzmomentes auftrennen, wobei eine Scherbolzenkupplung für sich genommen aus der DE 71 33 897 U1 bekannt ist.

Aus der DE 38 16 828 C2 sind Kegelrad-Winkelgetriebe mit Durchgangswelle zum Antrieb landwirtschaftlicher Geräte bekannt, bei denen zum Schutz einzelner Antriebsstränge bzw. Nebenantriebe Kupplungen vorgesehen sind.

Aus der DE 195 01 463 A1 ist ein Wellengeneratorgetriebe zur Elektroenergieerzeugung an Bord von Schiffen bekannt, mit einer Durchgangswelle, welche in das Getriebe führt und aus dem Getriebe geführt ist, sowie mit einer zusätzlichen Abtriebswelle, welche durch die Durchgangswelle angetrieben ist, wobei die Durchgangswelle in einer Hohlwelle gelagert ist, die Hohlwelle selbst drehbar gelagert und als Zwischenelement zwischen der Durchgangswelle und der zusätzlichen Abtriebswelle angeordnet ist, derart, dass die zusätzliche Abtriebswelle mit der Hohlwelle antriebswirksam verbunden ist, und die Hohlwelle und die Durchgangswelle kraftbegrenzt miteinander verbunden sind. Durch diese Getriebekonstruktion sollen Nachteile vermieden werden, welche die ansonsten in Schiffs-Wellengeneratoren verwendeten Reitergetriebe und Tunnelgertiebe aufweisen. Die Anordnung mehrerer Getriebe in einer Reihenschaltung ist dabei nicht vorgesehen.

Der Erfindung liegt die Aufgabe zugrunde, einen gattungsgemäßen Futtermischer dahingehend zu verbessern, dass dieser eine Reihenschaltung mehrerer Getriebe ermöglicht, von denen jedes Getriebe auf einfache und preisgünstige Weise gegen Überlast abgesichert ist und wobei sichergestellt ist, dass die in Kraftflussrichtung nachgeschalteten Getriebe betriebsbereit bleiben, auch wenn die Überlastsicherung des vorgeschalteten Getriebes anspricht.

Diese Aufgabe wird durch einen Futtermischer mit den Merkmalen des Anspruchs 1 gelöst.

Die Erfindung schlägt mit anderen Worten vor, durch die Verwendung einer Hohlwelle eine Verzweigung des Kraftflusses zu ermöglichen. Die Hohlwelle treibt ihrerseits die Abtriebswelle des Getriebes an und ist kraftbegrenzt mit der Durchgangswelle des Getriebes verbunden, wird also durch diese angetrieben. Sobald eine Überlastung des Getriebes zu befürchten ist, trennt der Kraftbegrenzer den Kraftfluß zwischen Durchgangs- und Hohlwelle. Die Durchgangswelle kann sich ungehindert weiterhin drehen und in Kraftflussrichtung nachgeschaltete Getriebe antreiben, während das betreffende, überlastete Getriebe zuverlässig aus dem Kraftfluss herausgenommen ist.

Mit der vorgeschlagenen Getriebekonstruktion kann eine beliebig große Anzahl von Getrieben in Kraftflussrichtung hintereinander geschaltet werden, wobei jedes einzelne Getriebe individuell abgesichert ist und der Kraftfluss zu jeweils den anderen Getrieben auch weiterhin sichergestellt ist, wenn die Überlastungssicherung eines bestimmten Getriebes anspricht.

Als Kraftbegrenzer kommen verschiedene, aus der Praxis als fachüblich bekannte Maßnahmen in Frage, rein beispielhaft eine Rutschkupplung. Die Hohlwelle kann vorteilhaft durch einen Abscherstift mit der Durchgangswelle verbunden sein. Es kann sich dabei um einen quer durch diese beide Wellen gesteckten Abscherstift handeln. Die Verwendung von Abscherstiften lässt eine zuverlässige Berechnung der maximal auftretenden Kraft zu, mit welcher das Getriebe belastet werden soll. Es handelt sich um preisgünstige Austauschteile, die im Reparaturfall mit geringen Material- und Wartungskosten ersetzt werden können. Zudem verbrauchen sie beispielsweise wenig Bauraum, sodass sie eine Überlastsicherung auch in beengten räumlichen Einbausituationen ermöglichen oder bei einer Überarbeitung bereits bestehender Getriebekonstruktionen verwirklicht werden können.

Vorteilhaft wird der Abscherstift nicht direkt durch die beiden Wellen gesteckt, um die Wellenquerschnitte nicht zu schwächen. Vielmehr können auf beiden Wellen, also auf der Hohlwelle und auf der Durchgangswelle, radiale Vorsprünge vorgesehen sein, die ihrerseits durch den Abscherstift - oder durch mehrere Abscherstifte - miteinander verbunden sind. Es kann sich dabei um einen einzigen, fingerartigen radialen Vorsprung jeweils auf den beiden Wellen handeln. Um eine optimale Auswuchtung der Welle zu ermöglich, können zwei gegenüberliegende oder mehrere gleichmäßig um den Umfang verteilte derartige Vorsprünge vorgesehen sein oder umlaufende ringförmige Flansche.

Derartige Getriebe werden bei den eingangs erwähnten Futtermischern verwendet wo mit hohen Antriebsleistungen von 200 PS oder mehr gearbeitet wird. Hier ist angesichts der Antriebsleistungen die Konstruktion von Verteilergetrieben besonders kostenaufwendig, ebenso sind zerstörte Getriebe für diese Leistungsklasse vergleichsweise teuer. Es kann daher erfindungsgemäß mit besonders kostengünstigen Mitteln ein Futtermischer dahingehend verbessert werden, dass die beiden oder mehrere vorgesehenen Getriebe jeweils individuell abgesichert sind, insbesondere das in Kraftflussrichtung vordere von zwei oder mehreren Getrieben kann auf diese Weise abgesichert sein, da für dieses vordere Getriebe in der Praxis bislang nur die Wahl zwischen dem Verzicht auf eine Absicherung oder die kostenträchtige Ausgestaltung mit einem Verteilergetriebe vorgesehen war.

Ein Ausführungsbeispiel der Erfindung wird anhand der rein schematischen Zeichnungen näher erläutert. Dabei zeigt
- Fig. 1: in einer grob schematisierten Darstellung, teilweise geschnitten, einen Futtermischer mit zwei Rühr-werken,
- Fig. 2: ein Getriebe nach dem Stand der Technik, wie es in einem Futtermischer gemäß Fig. 1 Verwendung finden kann, und
- Fig. 3: ein vorschlagsgemäßes Getriebe, welches bei dem Futtermischer von Fig. 1 Verwendung findet.

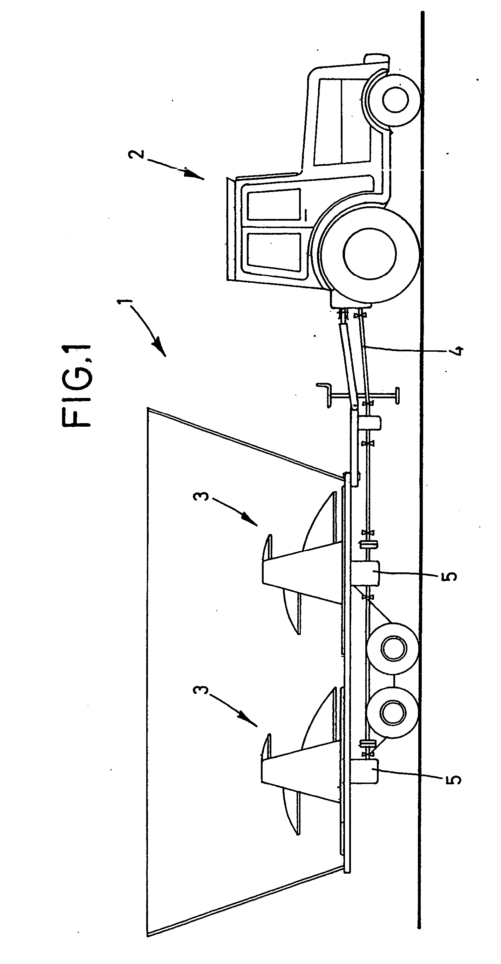

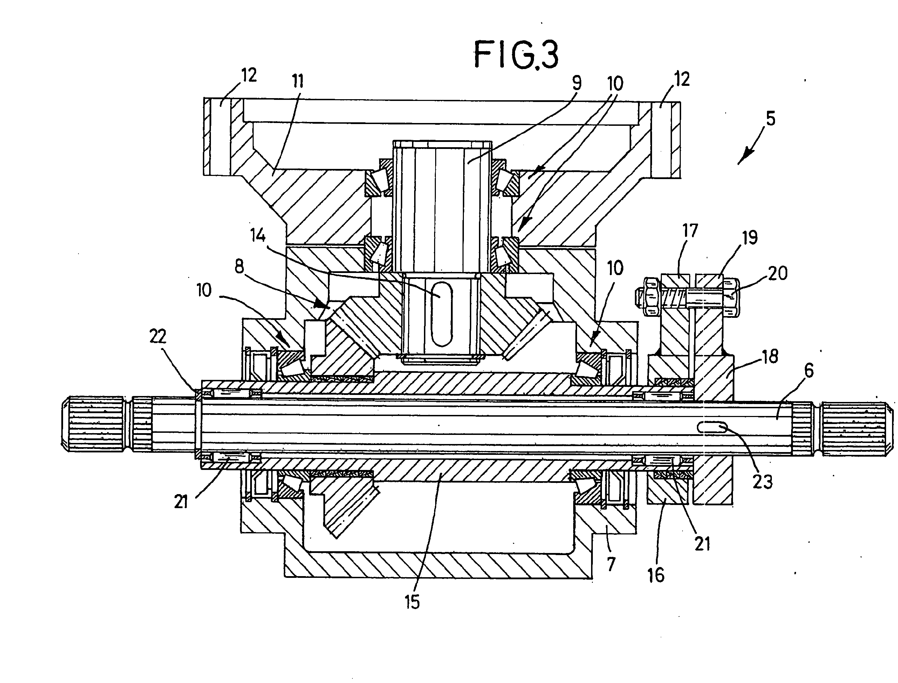

In Fig. 1 ist mit 1 ein Futtermischer bezeichnet, der an eine landwirtschaftliche Zugmaschine 2 angehängt ist. Der Futtermischer 1 weist zwei Rührwerke 3 auf. Diese Rührwerke sind von einer Zapfwelle 4 angetrieben, die zu zwei Getrieben 5 geführt ist. Rein schematisch ist in Kraftflussrichtung vor jedem Getriebe 5 eine Überlastsicherung dargestellt, in Form von jeweils zwei angedeuteten Scheiben oder Flanschen, die z. B. mittels Abscherstiften torsionskraftübertragend miteinander verbunden sind. Anhand von Fig. 3 werden die Getriebe 5 und die Überlastsicherungen näher erläutert.

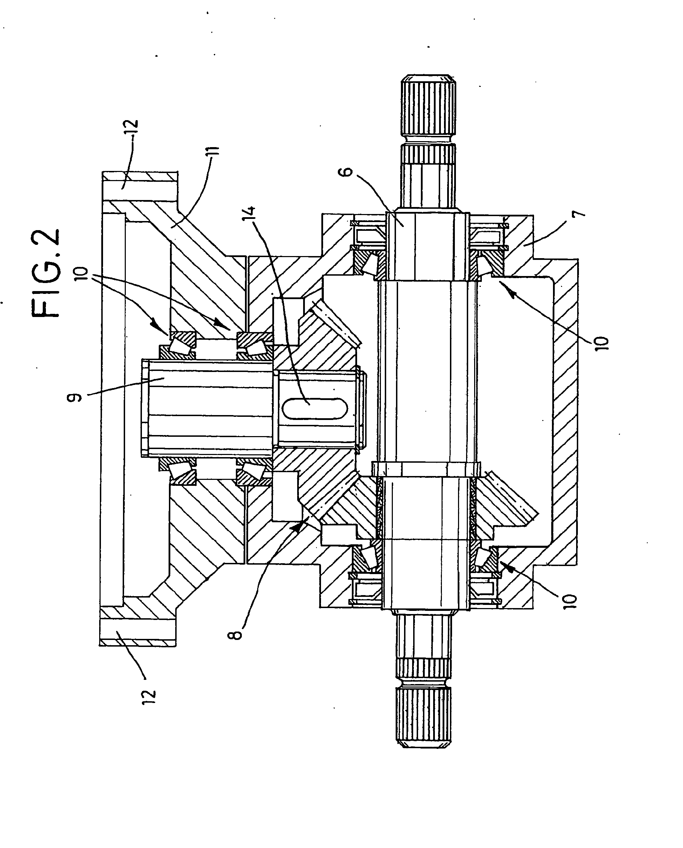

Bei diesen Getrieben 5 handelt es sich um Getriebekonstruktionen, wie sie - bis auf die Überlastsicherung - in ähnlicher Form aus dem Stand der Technik bekannt sind. Ein derartiges Getriebe nach dem Stand der Technik wird anhand von Fig. 2 erläutert:

Dieses bekannte Getriebe weist eine Durchgangswelle 6 auf, welche innerhalb eines Getriebegehäuses 7 gelagert ist und welche über eine Kegelradverzahnung 8 eine Abtriebswelle 9 antreibt. Sowohl die Durchgangswelle 6 als auch die Abtriebswelle 9 sind jeweils mittels Kegelrollenlagern 10 gelagert. Das Getriebegehäuse 7 weist einen oberen, schüsselartigen Gehäuseteil 11 auf, der über mehrere Bohrungen 12 die Verschraubung des Getriebes mit dem Unterboden des Futtermischers 1 ermöglicht. Eine Passfeder 14 stellt den Kraftfluss zwischen der Kegelradverzahnung 8 und der Abtriebswelle 9 sicher.

Wenn bei einem derartigen Getriebe gemäß Fig. 2 nach dem Stand der Technik eine Überlastungssicherung vorgesehen ist, wird der Kraftfluss zwischen der Zapfwelle und der Durchgangswelle 6 unterbrochen, sodass nicht nur das betroffene Getriebe selbst vor Überlastungen geschützt ist, sondern auch sämtliche in Kraftflussrichtung nachgeschalteten Getriebe vom Antrieb abgekoppelt sind.

Demgegenüber zeigt Fig. 3 ein vorschlagsgemäßes Getriebe 5, bei dem Bauteile, die mit ähnlichen Bauteilen des bekannten Getriebes gemäß Fig. 2 vergleichbar sind, mit den gleichen Bezugszeichen wie in Fig. 2 gekennzeichnet sind.

Das vorschlagsgemäße Getriebe 5 weist eine Durchgangswelle 6 auf, die denselben für die übertragbaren Kräfte maßgeblichen Minimaldurchmesser aufweisen kann wie die Durchgangswelle 6 des bekannten Getriebes nach Fig. 2. Innerhalb des Getriebegehäuses 7 jedoch ist die Durchgangswelle 6 des vorgeschlagenen Getriebes 5 nach Fig. 3 weniger stark konturiert als die bekannte Durchgangswelle 6 von Fig. 2. Hierdurch wird der frei verfügbare Bauraum innerhalb des Getriebegehäuses 7 nutzbar für die Anordnung einer Hohlwelle 15, durch welche sich die Durchgangswelle 6 erstreckt.

Die Hohlwelle 15 weist einen Flansch 16 mit einem radialen Vorsprung 17 auf, und die Durchgangswelle 6 weist einen ähnlichen Flansch 18 mit Vorsprung 19 auf. Die beiden Vorsprünge 17 und 19 sind durch einen Abscherstift 20 kraftübertragend miteinander verbunden, sodass bei Drehung der Durchgangswelle 6 die Hohlwelle 15 ebenfalls in Drehung versetzt wird. Bei Überlastung des Getriebes 5 schert der Abscherstift 20 ab, sodass das überlastete Getriebe 5 aus dem Kraftfluss ausgekoppelt ist, sich die Durchgangswelle 6 jedoch nach wie vor drehen kann und damit die in Kraftflussrichtung nachgeschalteten Getriebe antreiben kann.

Zwischen der Durchgangswelle 6 und der Hohlwelle 15 sind Nadellager 21 vorgesehen. Während die Hohlwelle 15 durch die Kegelrollenlager gegen axiale Verschiebungen gesichert ist, kann eine derartige Sicherung bei der Durchgangswelle 6 durch einen Sicherungsring 22 und den Flansch 18 verwirklicht sein. Eine Kraftübertragung zwischen der Durchgangswelle 6 und dem Flansch 18 erfolgt durch eine Passfeder 23.

## Patentansprüche

1. Futtermischer,
mit zwei Rührwerken, wobei jedes Rührwerk mit einem eigenen Getriebe verbunden ist,
und wobei eine Eingangswelle antriebswirksam zu beiden Getrieben geführt ist,
**gekennzeichnet durch**
ein Getriebe (5),
mit einer Durchgangswelle, welche in das Getriebe führt und aus dem Getriebe geführt ist,
sowie mit einer zusätzlichen Abtriebswelle, welche **durch** die Durchgangswelle angetrieben ist,
wobei die Durchgangswelle (6) in einer Hohlwelle (15) gelagert ist;
welche Hohlwelle (15) selbst drehbar gelagert und als Zwischenelement zwischen der Durchgangswelle (6) und der zusätzlichen Abtriebswelle (9) angeordnet ist, derart, dass die zusätzliche Abtriebswelle (9) mit der Hohlwelle (15) antriebswirksam verbunden ist,
und wobei die Hohlwelle (15) und die Durchgangswelle (6) kraftbegrenzt miteinander verbunden sind.

2. Futtermischer nach Anspruch 1,
**dadurch gekennzeichnet,**
**dass** die Durchgangswelle (6) und die Hohlwelle (15) durch einen Abscherstift (20) antriebswirksam miteinander verbunden sind.

3. Futtermischer nach Anspruch 2,
**dadurch gekennzeichnet,**
**dass** auf der Hohlwelle (15) und auf der Durchgangswelle (6) jeweils ein radialer Vorsprung (17, 19) vorgesehen ist,
wobei beide Vorsprünge (17, 19) durch den Abscherstift (20) miteinander verbunden sind.

4. Futtermischer nach einem der vorhergehenden Ansprüche,
**dadurch gekennzeichnet,**
**dass** das in Kraftflussrichtung vordere Getriebe (5) nach einem der Ansprüche 1-3 ausgestaltet ist.

## Claims

1. A feed mixer, with two agitators, wherein each agitator is connected to its own transmission and wherein an input shaft is guided with driving action to both transmissions,
**characterised by**
a transmission (5), with a through shaft which guides into the transmission and from the transmission, and with an additional driven shaft which is driven by the through shaft, wherein the through shaft (6) is mounted in a hollow shaft (15); which hollow shaft (15) is itself rotatably mounted and is arranged as an intermediate element between the through shaft (6) and the additional driven shaft (9), so that the additional driven shaft (9) is connected with driving action to the hollow shaft (15).

2. The feed mixer according to Claim 1,
**characterised in that**
the through shaft (6) and the hollow shaft (15) are connected to each other with driving action by a shearing pin (20).

3. The feed mixer according to Claim 2,
**characterised in that**
a radial projection (17, 19) is provided on both the hollow shaft (15) and on the through shaft (6), wherein both projections (17, 19) are connected to each other by the shearing pin (20).

4. The feed mixer according to any one of the preceding claims,
**characterised in that**
the front transmission (5), viewed in the direction of the magnetic flux, is designed according to Claims 1 - 3.

## Revendications

1. Mélangeur de fourrage,
comprenant plusieurs appareils mélangeurs, chaque appareil mélangeur étant relié à un renvoi particulier,
et un arbre d'entrée aboutissant à deux renvois pour l'entraînement,
**caractérisé par**
un renvoi (5)
comprenant un arbre traversant qui pénètre dans le renvoi et émerge du renvoi,
ainsi qu'un arbre de sortie additionnel qui est entraîné par l'arbre traversant,
l'arbre traversant (6) étant logé dans un arbre creux (15),
lequel arbre creux (15) est lui-même monté rotatif et agencé en tant qu'élément intermédiaire entre l'arbre traversant (6) et l'arbre de sortie additionnel (9), de telle manière que l'arbre de sortie additionnel (9) soit relié à l'arbre creux (15) pour l'entraînement,
et dans lequel l'arbre creux (15) et l'arbre traversant (6) sont reliés l'un à l'autre avec limitation de la force.

2. Mélangeur de fourrage selon la revendication 1,
**caractérisé**
**en ce que** l'arbre traversant (6) et l'arbre creux (15) sont reliés entre eux pour l'entraînement par une goupille de cisaillement (20).

3. Mélangeur de fourrage selon la revendication 2,
**caractérisé**
**en ce qu'**une saillie radiale (17, 19) est prévue sur chacun des deux arbres, l'arbre creux (15) et l'arbre traversant (6), les deux saillies (17, 19) étant reliées entre elles par la goupille de cisaillement (20).

4. Mélangeur de fourrage selon une des revendications précédentes,
**caractérisé**
**en ce que** le renvoi (5) placé en amont dans le sens du flux de force est configuré selon une des revendications 1-3.
